# EUROPÄISCHE PATENTSCHRIFT

(11) **EP 1 226 639 B1**
(45) Veröffentlichungstag und Bekanntmachung des Hinweises auf die Patenterteilung: **24.09.2003**
(21) Anmeldenummer: 00987059.3
(22) Anmeldetag: 27.10.2000
(51) Int. Cl.: H02B 1/21, H02G 5/02

(54) **STROMSCHIENENANORDUNG FÜR EIN ELEKTRISCHES SCHALTFELD**
CONDUCTOR BAR ARRANGEMENT FOR AN ELECTRICAL SWITCHPANEL
ENSEMBLE RAIL CONDUCTEUR POUR UN SYSTEME DE COMMUTATION ELECTRIQUE

(30) Priorität: 03.11.1999 DE 19953561
(43) Veröffentlichungstag der Anmeldung: 31.07.2002
(73) Patentinhaber: SIEMENS AKTIENGESELLSCHAFT, 80333 München (DE)
(72) Erfinder: SCHMIDT, Mario, 04178 Leipzig (DE); BÜSSERT, Stephan, 04275 Leipzig (DE); KLAUS, Matthias, 06888 Zörnigall (DE)
(86) Internationale Anmeldenummer: DE0003841
(87) Internationale Veröffentlichungsnummer: WO01033681

(56) Entgegenhaltungen:
- EP-A- 0 004 266
- DE-C- 754 048
- GB-A- 914 488

## Beschreibung

Die Erfindung betrifft eine mehrzügige Stromschienenanordnung für ein elektrisches Schaltfeld mit folgenden Merkmalen:
- parallel zu einer Wandebene des Schaltfeldes angeordnete schienenförmige Stromleiter,
- im Schaltfeld befestigte Stromschienenhalter zur Abstützung der Stromleiter in einem gegenseitigen Abstand und in einem Abstand zu der Wandebene.

Die EP-A- 000 42 66 offenbart derartige mehrzügige stromschienenanordnung

Unter einer mehrzügigen Stromschienenanordnung wird hier verstanden, daß wenigstens zwei gegeneinander und gegen Erde isoliert verlegte Stromleiter vorhanden sind. Diese können beispielsweise beiden Polaritäten eines Gleichstromsystems zugeordnet sein. Ist die Anordnung dreizügig, d.h. sind drei gegeneinander und gegen Erde isolierte Stromleiter vorhanden, so können diese den Phasen eines Drehstromsystems zugeordnet sein. Ein weiterer Zug eines Stromleiters gestattet die Mitführung eines Neutralleiters.

Die mittels einer Stromschienenanordnung der vorgenannten Art übertragbare Stromstärke kann in bekannter Weise durch die Wahl eines geeigneten Werkstoffes und/oder des Querschnittes der einzelnen Stromleiter an die jeweilige Aufgabe angepaßt werden. Darüber hinaus kann jeder Stromleiter aus zwei oder mehr elektrisch und räumlich parallelen Stromleitern bestehen, um die übertragbare Stromstärke zu erhöhen.

Insbesondere drei- und mehrzügige Stromschienenanordnungen mit einem oder zwei parallelen Stromleitern je Zug erfordern elektrisch und mechanisch zuverlässige Stromschienenhalter zur Abstützung der Stromleiter gegenüber dem Schaltfeld. Dabei ist es im Zusammenhang mit der Erfindung unwesentlich, zu welcher Bauart das Schaltfeld gehört. Stets besteht hier die Aufgabe, die Stromleiter im Abstand zu einer -in der Regel elektrisch leitenden und geerdeten- Wandfläche zu halten, gleichgültig, ob diese Wandfläche durch eine tragende Wand des Schaltfeldes, durch eine wandartige Abdeckung eines Gerüstes oder eine Zwischenwand gebildet ist. Als Schaltfelder werden daher im Zusammenhang mit der Erfindung gleichermaßen die benachbarten Felder einer Niederspannungs-schaltanlage und benachbarte bzw. angereihte Schränke verstanden. Zur Montage der Stromleiter hat man hier bisher einstückige, aus isolierenden Kunststoffen hergestellte Stromschienenhalter benutzt, die Auflageflächen- und Befestigungsmittel für alle vorgesehenen Stromleiter umfassen. Beispiele für solche Stromschienenhalter sind in der DE 27 17 134 C2, der DE 38 11 569 C2 und der DE 1 242 732 beschrieben. Darüber hinaus sind. Stromschienenhalter entwickelt worden, die neben der Funktion der Abstützung und Halterung der einzelnen Stromleiter zugleich den Berührungsschutz gewährleisten, vgl. DE 28 38 365 C2. Alle diese Stromschienenhalter erfordern zu ihrer Herstellung mehr oder weniger aufwendige Herstellungsverfahren und Verarbeitungsmaschinen.

Der Erfindung liegt hiervon ausgehend die Aufgabe zugrunde, einen Stromschienenhalter zu schaffen, der keines aufwendigen Herstellungsverfahrens bedarf und der darüber hinaus für unterschiedliche Konfigurationen von Stromleitern geeignet ist.

Gemäß der Erfindung wird diese Aufgabe durch folgende Merkmale gelöst:
- jeder Stromschienenhalter umfaßt wenigstens zwei zueinander und zu der Wandebene parallele leistenförmige Tragstücke, die in einem der Dicke der Stromleiter entsprechenden Abstand angeordnet sind,
- wenigstens einer der Stromleiter ist zwischen den Tragstücken angeordnet und liegt an den einander zugekehrten Flächen der Tragstücke an, und
- ein weiterer Stromleiter ist an einem der Tragstücke außen anliegend angeordnet unter Bildung einer bezüglich des gegenseitigen Abstandes und des Abstandes zur Wandebene gestaffelten Anordnung der Stromleiter.

Für die Erfindung ist es wesentlich, daß zur Herstellung der Stromschienenhalter ein leicht beschaffbares streifenförmiges Halbzeug ausreicht. Offensichtlich sind unterschiedlich lange Abschnitte von einem streifenförmigen Halbzeug mit einem geringem und von der Länge unabhängigen Aufwand durch Sägen, Stanzen oder Schneiden abteilbar. Auch wird durch die Zuordnung der Stromleiter zu den parallelen leistenförmigen Tragstücken eine gestaffelte Anordnung der Stromleiter gebildet, die einen verbesserten Zugang zu den einzelnen Stromleitern ermöglicht und daher den Anschluß von abzweigenden Leitern oder Schienen erleichtert. Daher eignen sich Stromschienenanordnungen nach der Erfindung besonders zur Anwendung als Feldschienen, die in Schaltfeldern vertikal verlaufend angeordnet sind und die zur Verteilung der mittels einer Hauptsammelschiene zugeführten Energie auf mehrere Verbraucherabzweige dienen.

Im Rahmen der Erfindung kann zwischen den Tragstücken im Bereich eines außen aufliegenden Stromleiters ein Füllstück angeordnet sein, dessen Dicke dem zwischen den Tragstücken aufgenommenen Stromleiter entspricht. Hierdurch werden die parallelen Tragstücke gegeneinander abgestützt, was die Verwendung eines an dieser Stelle alle Tragstücke, Stromleiter und Füllstücke durchsetzenden Befestigungsmittels gestattet. In diesem Zusammenhang ist es vorteilhaft, wenn die Stromleiter, die Tragstücke und die Füllstücke zum Durchtritt der Befestigungsmittel mit fluchtenden Öffnungen versehen sind.

Obwohl es zur Befestigung der Stromleiter ausreichend wäre, für den Durchtritt der Befestigungsmittel einfache Durchgangslöcher vorzusehen, erweist es sich als günstiger, die Öffnungen in den Stromleitern als Langlöcher auszubilden, die sich in der Längsrichtung der Stromleiter erstrecken. Dies ermöglicht es nämlich, die Stromschienenhalter innerhalb der Erstreckung der Langlöcher versetzt im Schaltfeld zu montieren, falls dies die Unterbringung von Geräten im Schaltfeld oder die Herstellung von Abzweigen erleichtert.

Für alle im Rahmen der Erfindung betrachteten Stromschienenanordnungen, die einen oder mehr als einen Stromleiter je Zug bzw. Phase aufweisen, eignet sich eine Anordnung, bei der wenigstens ein erstes der Tragstücke an beiden Enden am Schaltfeld abgestützt und an diesem befestigt ist, während wenigstens ein weiteres Tragstück mit einem oder beiden Enden an dem ersten Tragstück abgestützt und befestigt ist, wobei das weitere Tragstück entsprechend der Position eines an diesem Tragstück anliegenden Stromleiters gegenüber dem ersten Tragstück verkürzt ausgebildet ist. Das erste Tragstück übernimmt dabei die Funktion der Befestigung der gesamten Stromschienenanordnung am Schaltfeld. Bei zwei parallelen Stromleitern je Zug bzw. Phase können entsprechend zwei gleichlange Tragstücke gemeinsam die Trag- und Befestigungsfunktion übernehmen. Durch die parallel aufliegenden weiteren Tragstücke entsteht ein stabiler, biegesteifer Verbund, der den auftretenden Kräften zu widerstehen vermag.

Die Erfindung wird im folgenden anhand der in den Figuren dargestellten Ausführungsbeispiele näher erläutert.

Die Figur 1 zeigt in einer perspektivischen Darstellung einen Teil eines Feldes einer Niederspannungs-Schaltanlage mit einer als Feldschiene dienenden Stromschienenanordnung, die je zwei Leiter je Phase und für den Neutralleiter aufweist.

In der Figur 2 ist die Stromschienenanordnung gemäß der Figur 1 vergrößert im Schnitt gezeigt.

Die Figur 3 zeigt ein weiteres Ausführungsbeispiel einer Stromschienenanordnung mit je einem Stromleiter je Phase und Neutralleiter.

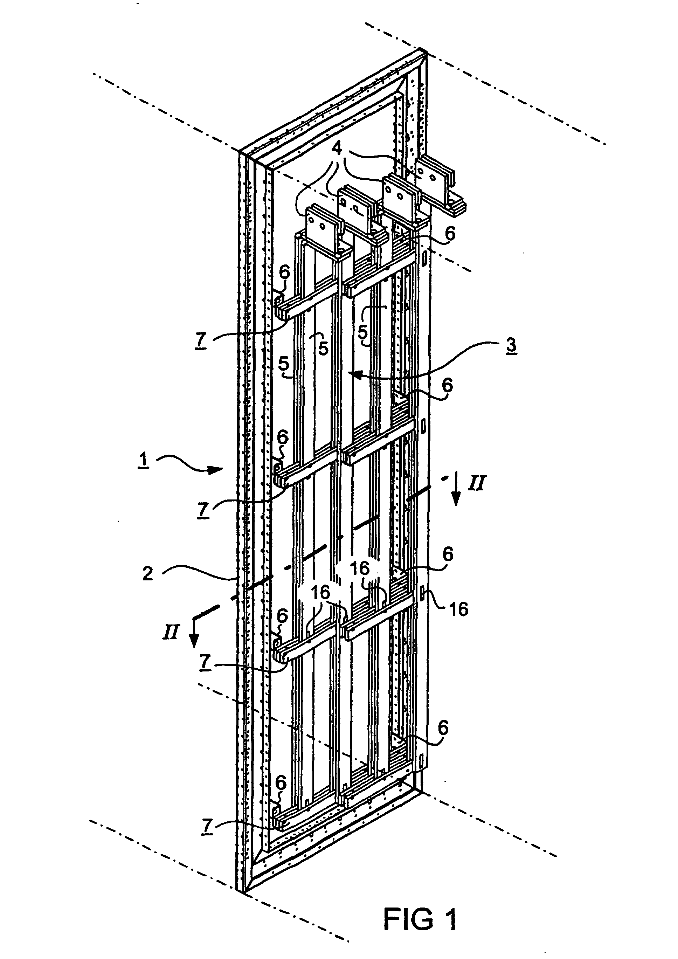

Der in der Figur 1 in perspektivischer Darstellung gezeigte Teil eines Schaltfeldes 1 stellt einen - bei frontseitiger Betrachtung - links angeordneten Seitenrahmen 2 und eine daran angebrachte Stromschienenanordnung 3 dar. Durch strichpunktierte Linien ist die Erstreckung der Schaltanlage angedeutet. Durch den Seitenrahmen 2 wird eine Wandebene gebildet, obwohl bei Anreihung eines weiteres Schaltfeldes nicht in jedem Fall eine Zwischen- oder Schottwand eingebaut wird.

Die Stromschienenanordnung 3, die mittels oben gezeigter Verbindungsstücke 4 mit einer nicht gezeigten horizontalen Hauptsammelschiene zu verbinden ist, dient zur Energieverteilung innerhalb des zugehörigen Schaltfeldes. In bekannter Weise können hierzu fest oder einschiebbar angeordnete Schaltgeräte oder Kombinationen von Schaltgeräten (nicht dargestellt) mit der vertikalen Stromschienenanordnung 3 verbunden sein.

Zur Führung von Drehstrom mit Neutralleiter ist die Stromschienenanordnung 3 vierzügig ausgebildet. Hierbei sind in jedem der vier Züge je zwei parallel zueinander und parallel zur Wandebene des Seitenrahmens 2 angeordnete Stromleiter 5 angeordnet. Diese Stromleiter 5 sind in bekannter Weise Profilschienen mit rechteckigem Querschnitt, die aus einem für den vorliegenden Zweck geeigneten Werkstoff, wie Kupfer oder Aluminium, bestehen. Ferner sind die beiden zu einem Zug der Stromschienenanordnung 3 gehörenden Stromleiter 5 mittels der oberen Verbindungsstücke 4 elektrisch parallel geschaltet.

Zur Befestigung der Stromschienenanordnung 3 ist der Seitenrahmen 2 vorn und hinten mit Paaren von Winkelstücken 6 versehen, auf denen Stromschienenhalter 7 aufliegen. Insgesamt sind bei dem Ausführungsbeispiel gemäß der Figur 1 vier Stromschienenhalter 7 vorgesehen, wobei diese Anzahl je nach den vorliegenden Bedingungen (insbesondere Anzahl der Stromleiter und deren Gewicht sowie elektrodynamische Beanspruchung durch den über die Stromleiter 5 fließenden Strom) kleiner oder größer sein kann. Dementsprechend sind insgesamt acht Winkelstücke 6 paarweise am Seitenrahmen 2 angebracht.

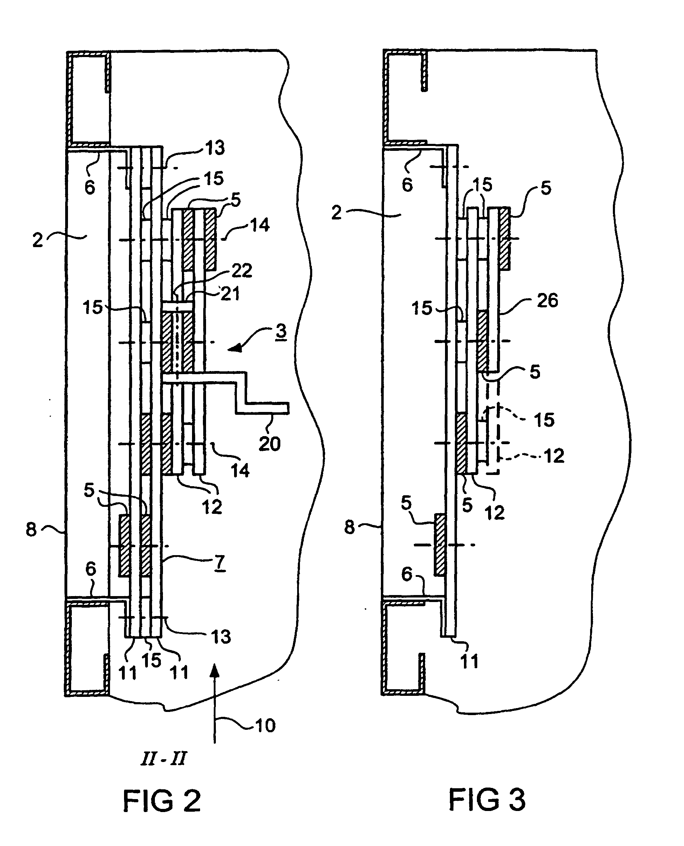

Jeder der gezeigten Stromschienenhalter 7 ist aus mehreren Isolier- und Befestigungsteilen zusammengesetzt, wie dies näher in der Figur 2 anhand eines in der Figur 1 markierten Schnittes II-II dargestellt ist. In der Figur 2 ist durch einen Pfeil 10 die Richtung bezeichnet, in der ein Benutzer des Schaltfeldes 1 (Figur 1) Zugang zu der Stromschienenanordnung 3 hat. Ferner ist eine tatsächlich vorhandene oder durch den Seitenrahmen 2 definierte Wandebene 8 angedeutet.

Die jeweils einen Zug der Stromschienenanordnung 3 bildenden parallelen Stromleiter 5 werden gemäß der Figur 2 von zwei leistenförmigen isolierenden Tragstücken 11 sowie von zwei weiteren, kürzer bemessenen Tragstücken 12 getragen. Die beiden längeren Tragstücke 11 sind gemeinsam nahe ihren Enden mit den Winkelstücken 6 durch geeignete Befestigungsmittel 13 verbunden, für deren Durchtritt fluchtende Öffnungen vorgesehen sind Die beiden kürzeren Tragstücke 12 sind nahe ihren Enden an den längeren Tragstücken 11 befestigt, wobei in Verbindungen mit fluchtenden Öffnungen gleiche oder ähnliche Befestigungsmittel 14 benutzt werden können. Ob als Befestigungsmittel Schrauben, Niete oder ähnliche Mittel eingesetzt werden, hängt von der Verfügbarkeit oder Zweckmäßigkeit ab. In der Figur 2 sind daher die Befestigungsmittel 13 und 14 nur durch ihre Mittellinien dargestellt.

Alle in der Figur 2 gezeigten Tragstücke 11 und 12 weisen einen der Dicke der Stromleiter 5 entsprechenden Abstand auf, der durch die Stromleiter 5 selbst oder durch Füllstücke 15 aufrechterhalten wird, deren Dicke den Stromleitern 5 angepaßt ist. Es empfiehlt sich, aus einem isolierenden Kunststoff bestehende Füllstücke zu verwenden.

Wie die Figur 2 zeigt, sind die Stromleiter 5 in der schon erläuterten parallelen und paarweisen Anordnung derart an bzw. zwischen den Tragstücken 11 und 12 abgestützt, daß sich eine zur Wandebene 8 gestaffelte Position der einzelnen Züge von Stromleitern ergibt. Ein vor dem Schaltfeld 1 befindlicher Benutzer gewinnt hierdurch in der Richtung des Pfeiles 10 einen leichteren Zugang zu den Stromleitern als bei gleichem Abstand zur Wandebene 8. Die gestaffelte Anordnung ist so gestaltet, daß von den insgesamt acht Stromleitern 5 sechs zwischen den Tragstücken 11 bzw. 12 jeweils um ein Tragstück 11 bzw. 12 versetzt aufgenommen sind, während einer der verbleibenden beiden Stromleiter 5 an der Außenseite des unmittelbar an den Winkelstücken 6 anliegenden Tragstückes 11 anliegt und der weitere verbleibende Stromleiter 5 an dem äußeren der beiden Tragstücke 12 befestigt ist. Wie in der Figur 2 gezeigt ist, durchsetzen die Befestigungsmittel 13 und 14 jeweils alle aufeinander liegenden Tragstücke, Füllstücke und Stromleiter, wodurch eine stabile und biegesteife Anordnung entsteht, die allen auftretenden Kräften gewachsen ist.

Wie in der Figur 1 dargestellt ist, weisen die Stromleiter 5 als Öffnungen für den Durchtritt der Befestigungsmittel 14 Langlöcher 16 auf. Dies erlaubt bei gleicher vertikaler Position der Stromleiter 5 relativ zum Seitenrahmen 2 eine variable vertikale Position der Stromschienenhalter 7. Hierzu ist es lediglich erforderlich, die Winkelstücke 6 um ein gewünschtes Maß, vorzugsweise um eine oder mehrere vorgegebene Teilungseinheiten innerhalb einer Systemlochung des Seitenrahmens 2, versetzt zu befestigen. Diese Maßnahme gestattet es, von der Stromschienenanordnung 3 abzweigende Leiter oder Schienen gleichfalls in einer gewünschten anderen Position an den Stromleitern 5 anzubringen. Ein Beispiel für einen solchen Abzweig zeigt die Figur 2 in der Gestalt eines Abzweigleiters 20, der an den Schmalseiten des Profils der Stromleiter 5 anliegt. Ein Spannstück 21 sorgt in Verbindung mit einem Befestigungsmittel 22 für eine mechanische und elektrische Verbindung des Abzweigleiters 20 mit den Stromleitern 5. Die vertikale Position des Abzweigleiters 20 ist innerhalb des Zwischenraumes zwischen den Stromschienenhaltern 7 beliebig. Dank der gleichfalls variablen Lage der Stromschienenhalter 7 ist somit jede beliebige Position des Abzweigleiters 20 möglich, um bei möglichst einfacher Gestalt des Abzweigleiters 20 eine Verbindung zwischen der Stromschienenanordnung 3 und einem Verbraucherabzweig herzustellen.

In der Figur 3 ist ein weiteres Ausführungsbeispiel einer Stromschienenanordnung in einer der Figur 2 entsprechenden Darstellung gezeigt. Die hier dargestellte Stromschienenanordnung 25 ist gleichfalls vierzügig aufgebaut (3-Phasenstrom mit Neutralleiter), weist jedoch je Zug nur einen Stromleiter 5 auf, der den gleichen oder einen anderen Querschnitt als die Stromleiter 5 in der Figur 2 besitzen kann. Die Anzahl der zur Aufnahme der Stromleiter 5 dienenden Tragstücke ist gleichfalls geringer als in dem Beispiel gemäß der Figur 2 und beträgt insgesamt drei. Wie man erkennt, wird durch die parallele Anordnung von Tragstücken 11, 12 und 26 gleichfalls eine gestaffelte Lage der Stromschienen erreicht, die einem Benutzer den Zugang von der Frontseite des Schaltfeldes erleichtert. Die Tragstücke 11 und 12 entsprechen somit der aus der Figur 2 ersichtlichen Bemessung. Lediglich das Tragstück 26 ist abweichend von dem Tragstück 12 weiter verkürzt ausgebildet. Obwohl diese Maßnahme zur Verringerung des Bedarfes an Material beiträgt, kann es zweckmäßig erscheinen, anstelle des Tragstückes 26 ein weiters Tragstück 12 zu verwenden, um die Anzahl unterschiedlicher Teile zu beschränken. In diesem Fall empfiehlt es sich, zwischen die beiden Tragstücke 12 ein weiteres Füllstück einzulegen, wie dies in der Figur 3 gestrichelt dargestellt ist.

## Patentansprüche

1. Mehrzügige Stromschienenanordnung (3) für ein elektrisches Schaltfeld (1) mit folgenden Merkmalen:
- parallel zu einer Wandebene (8) des Schaltfeldes (1) angeordnete schienenförmige Stromleiter (5),
- im Schaltfeld (1) befestigte Stromschienenhalter (7) zur Abstützung der Stromleiter (5) in einem gegenseitigen Abstand und in einem Abstand zu der Wandebene (8),
**gekennzeichnet durch** folgende weitere Merkmale:
- jeder Stromschienenhalter (7) umfaßt wenigstens zwei zueinander und zu der Wandebene (8) parallele leistenförmige Tragstücke (11, 12, 26), die in einem der Dicke der Stromleiter (5) entsprechenden Abstand angeordnet sind,
- wenigstens einer der Stromleiter (5) ist zwischen den Tragstücken (11, 12, 26) angeordnet und liegt an den einander zugekehrten Flächen der Tragstücke (11, 12, 26) an, und
- ein weiterer Stromleiter (5) ist an einem der Tragstücke (11, 12, 26) außen anliegend angeordnet unter Bildung einer bezüglich des gegenseitigen Abstandes und des Abstandes zur Wandebene (8) gestaffelten Anordnung der Stromleiter (5) .

2. Stromschienenanordnung nach Anspruch 1 oder 2,
**dadurch gekennzeichnet, daß**
zwischen den Tragstücken (11, 12, 26) im Bereich eines außen aufliegenden Stromleiters (5) ein Füllstück (15) angeordnet ist, dessen Dicke dem zwischen den Tragstücken (11, 12, 26) aufgenommenen Stromleiter (5) entspricht.

3. Stromschienenanordnung nach Anspruch 1 oder 2,
**dadurch gekennzeichnet, daß**
die Stromleiter (5), die Tragstücke (11, 12, 26) und die Füllstücke (15) zum Durchtritt von Befestigungsmitteln (13, 14) mit fluchtenden Öffnungen versehen sind.

4. Stromschienenanordnung nach Anspruch 3,
**dadurch gekennzeichnet, daß**
die Öffnungen in den Stromleitern als Langlöcher (16) ausgebildet sind, die sich in der Längsrichtung der Stromleiter (5) erstrecken.

5. Stromschienenanordnung nach einem der vorangehenden Ansprüche mit mehr als zwei Zügen von Stromleitern (5),
**dadurch gekennzeichnet, daß** wenigstens ein erstes der Tragstücke (11) an beiden Enden am Schaltfeld (1) abgestützt und an diesem befestigt ist, während wenigstens ein weiteres Tragstück (12, 26) mit einem oder beiden Enden an dem ersten Tragstück (11) abgestützt und befestigt ist, wobei das weitere Tragstück (12, 26) entsprechend der Position eines an diesem Tragstück (12, 26) anliegenden Stromleiters (5) gegenüber dem ersten Trägstück (11) verkürzt ausgebildet ist.

## Claims

1. Multi-run busbar arrangement (3) for an electrical switch panel (1) having the following features:
- electrical conductors (5) in the form of a rail which are arranged parallel to a wall plane (8) on the switch panel (1),
- a busbar holder (7), which is mounted in the switch panel (1), for supporting the electrical conductors (5) spaced apart from one another and at a distance from the wall plane (8),
**characterized by** the following further features:
- each busbar holder (7) has at least two supporting pieces (11, 12, 26) which are in the form of strips, are parallel to one another and to the wall plane (8) and are arranged spaced apart at a distance corresponding to the thickness of the electrical conductors (5),
- at least one of the electrical conductors (5) is arranged between the supporting pieces (11, 12, 26) and rests on the mutually facing surfaces of the supporting pieces (11, 12, 26), and
- a further electrical conductor (5) is arranged resting on the outside of one of the supporting pieces (11, 12, 26), forming an arrangement of electrical conductors (5) which is staggered with respect to the mutual separation and to the distance from the wall plane (8).

2. Busbar arrangement according to Claim 1 or 2,
**characterized in that**
a filling piece (15), whose thickness corresponds to the electrical conductor (5) which is held between the supporting pieces (11, 12, 26), is arranged between the supporting pieces (11, 12, 26), in the area of an electrical conductor (5) which rests on the outside.

3. Busbar arrangement according to Claim 1 or 2,
**characterized in that**
the electrical conductors (5), the supporting pieces (11, 12, 26) and the filling pieces (15) are provided with aligned openings for attachment means (13, 14) to pass through.

4. Busbar arrangement according to Claim 3,
**characterized in that**
the openings in the electrical conductors are in the form of elongated holes (16), which extend in the longitudinal direction of the electrical conductors (5) .

5. Busbar arrangement according to one of the preceding claims, having more than two runs of electrical conductors (5),
**characterized in that**
at least a first of the supporting pieces (11) is supported on the switch panel (1), and is mounted on the switch panel (1) , at both ends, while at least one further supporting piece (12, 26) is supported and mounted by one or both ends on the first supporting piece (11), with the further supporting piece (12, 26) being designed to be shorter than the first supporting piece (11), corresponding to the position of an electrical conductor (5) which rests on this supporting piece (12, 26).

## Revendications

1. Ensemble de barres conductrices à voies multiples (3) destiné à un tableau de distribution électrique (1) présentant les caractéristiques suivantes :
- des conducteurs (5) en forme de barre disposés parallèlement au plan (8) d'une paroi du tableau de distribution (1),
- des supports de barre conductrice (7) fixés dans le tableau de distribution (1) et destinés à supporter les conducteurs (5) à une distance mutuelle et à une distance par rapport au plan (8) de la paroi,
**caractérisé par** les autres caractéristiques suivantes :
- chaque support de barre conductrice (7) comporte au moins deux pièces porteuses (1, 12, 26) en forme de barre, parallèles au plan de la paroi et disposées à une distance correspondant à l'épaisseur des conducteurs (5),
- au moins l'un des conducteurs (5) est disposé entre les pièces porteuses (11, 12, 26) et porte sur les surfaces tournées les unes vers les autres des pièces porteuses (11, 12, 26), et
- un autre conducteur (5) est disposé de façon à porter à l'extérieur sur l'une des pièces porteuses (11, 12, 26) en formant un agencement de conducteurs échelonné à distance les uns des autres et par rapport au plan (8) de la paroi.

2. Ensemble de barres conductrices selon la revendication 1, **caractérisé en ce qu'**une pièce intercalaire (15), dont l'épaisseur correspond au conducteur (5) reçu entre les pièces porteuses (11, 12, 26), est disposée entre les pièces porteuses (11, 12, 26) au niveau d'un conducteur (5) placé à l'extérieur.

3. Ensemble de barres conductrices selon la revendication 1 ou 2, **caractérisé en ce que** les conducteurs (5), les pièces porteuses (11, 12, 26) et les pièces intercalaires (15) sont dotés d'ouvertures alignées pour le passage des moyens de fixation (13, 14).

4. Ensemble de barres conductrices selon la revendication 3, **caractérisé en ce que** les ouvertures dans les conducteurs sont conformées en trous oblongs (16) qui s'étendent dans la direction longitudinale des conducteurs (5).

5. Ensemble de barres conductrices selon l'une des revendications précédentes comportant plus de deux voies de conducteurs (5), **caractérisé en ce que** au moins une première pièce porteuse (11) est supportée aux deux extrémités par le tableau de distribution (1) auquel elle est fixée, tandis que au moins une autre pièce porteuse (12, 26) est supportée à l'une des extrémités, ou aux deux, par la première pièce porteuse à laquelle elle est fixée, l'autre pièce porteuse (12, 26) étant conformée en fonction de la position d'un conducteur (5) portant sur cette pièce porteuse (12, 26) de façon à être plus courte que la première pièce porteuse (11).
